# FASCICULE DE BREVET EUROPEEN

(11) **EP 2 147 768 B1**
(45) Date de publication et mention de la délivrance du brevet: **09.09.2015**
(21) Numéro de dépôt: 09165915.1
(22) Date de dépôt: 20.07.2009
(51) Int. Cl.: B29C 45/14, B62D 25/08

(54) **Procédé de fabrication d'une face avant technique, et moule de surmoulage pour la fabrication d'une face avant technique**
Verfahren zur Herstellung eines technischen Front-Ends, und Werkzeug zum Überspritzen eines technischen Front-Ends
Method of manufacturing a technical front-end, and mould for over-moulding of a technical front-end

(30) Priorité: 24.07.2008 FR 0855057
(43) Date de publication de la demande: 27.01.2010
(73) Titulaire: Compagnie Plastic Omnium, 69007 Lyon (FR)
(72) Inventeur: Ballesteros, Fernando, 69006 Lyon (FR); Gille, Denis, 01100 Bellignat (FR)
(74) Mandataire: Potdevin, Emmanuel Eric

(56) Documents cités:
- EP-A- 1 398 557
- EP-A- 1 920 899
- WO-A-2005/097456
- DE-A1- 3 712 882
- JP-A- 56 064 458
- KAUFMANN G: "WERKZEUG ZUM UMSPRITZEN SCHALLDAEMMENDER TEXTILIEN" KUNSTSTOFFE, CARL HANSER VERLAG, MUNCHEN, DE, vol. 89, no. 9, 1 septembre 1999 (1999-09-01), pages 118-120, XP000958436 ISSN: 0023-5563
- AL-SHEYYAB A ET AL: "Kurzer Prozess bei hybriden Strukturen" KUNSTSTOFFE, CARL HANSER VERLAG, MUNCHEN, DE, no. 12, 1 décembre 2007 (2007-12-01), pages 120-124, XP008089369 ISSN: 0023-5563

## Description

La présente invention concerne les faces avant techniques de véhicule surmoulées, en particulier les traverses.

On connaît, par exemple de la demande FR-2 719 014 déposée par la demanderesse, une face avant technique de véhicule comportant une traverse métallique, insérée à chacune de ses extrémités dans un moule de sorte qu'une partie de la traverse dépasse du moule, et surmoulée par de la matière plastique destinée à former un support d'optique. Dans ce cas, l'étanchéité du moule est assurée par une portion de la paroi du moule coopérant avec la traverse.

On connaît, par exemple du document EP 1 920 899 un procédé de surmoulage d'une pièce métallique, le procédé mettant en oeuvre un moule de surmoulage comprenant deux surfaces d'étanchéité destinées à venir au contact de la pièce métallique, générant ainsi une séparation entre la cavité de surmoulage et l'extérieur de celle-ci.

Toutefois, dans certains cas, notamment lorsque la traverse est réalisée en un matériau thermodurcissable et du fait de son procédé de fabrication (moulage par compression), l'épaisseur de celle-ci est susceptible de varier. Le moule est alors configuré pour pouvoir se fermer sur toutes les traverses, y compris les traverses les plus épaisses, un jeu subsistant de ce fait entre le moule et les traverses les moins épaisses.

Du fait de ce jeu, l'étanchéité du moule n'est pas correctement assurée pour les traverses les moins épaisses. En effet, la matière plastique amenée sous pression à l'intérieur du moule a tendance à s'échapper vers l'extérieur du moule, notamment lorsque la pression dans le moule est élevée, par exemple lors de la phase de compactage du moulage par injection.

Or, les fuites de matière plastique vers l'extérieur du moule engendrent une dégradation de la qualité de l'élément fabriqué à partir de la traverse.

L'invention a pour but de remédier à cet inconvénient.

A cet effet, l'invention a pour objet un procédé de fabrication selon la revendication 1.

Par « contact linéaire », on entend que la surface de contact formée lorsque le relief entre en contact avec la pièce est étroite, par exemple de largeur inférieure à 5 mm, de préférence 3 mm. En outre, l'interface de contact n'est pas forcément rectiligne. Par exemple, l'interface peut s'étendre sur un pourtour de la pièce, être courbe ou même ne pas être contenue dans un unique plan.

Par « face ", on entend une surface délimitant la pièce. Une telle face n'est pas forcément plane.

Grâce à l'invention, l'étanchéité du moule de surmoulage est assurée de façon satisfaisante, quelle que soit l'épaisseur de la pièce.

En effet, le relief du moule va se trouver en contact avec la pièce à surmouler lorsque le moule est en position fermée. La force de fermeture est alors distribuée uniquement au niveau de l'interface de contact. Cette dernière étant de petite dimension et la force de fermeture appliquée sur la pièce étant importante, la pression exercée sur la pièce au niveau de l'interface de contact est importante. On peut même prévoir que le relief est apte à poinçonner la pièce, c'est à dire à entailler la pièce sur une profondeur restant faible par rapport à l'épaisseur de la pièce, de sorte que ce poinçonnage n'endommage pas la pièce à surmouler et ne dégrade pas ses propriétés mécaniques.

Ainsi, on choisit de fermer le moule de façon étanche et sans jeu pour la pièce la moins épaisse, en conformant le moule de sorte que le relief soit en contact intime avec la pièce la moins épaisse sur toute une dimension de celle-ci. Lorsque la pièce est plus épaisse, le relief du moule poinçonne la pièce, assurant de fait également une bonne étanchéité de la liaison entre le moule et la pièce.

Le moule poinçonne donc la pièce lorsqu'elle présente une dimension supérieure à une dimension prédéterminée.

Grâce à l'invention, la qualité des éléments fabriqués est améliorée, l'étanchéité à l'interface entre la pièce et le moule étant assurée pendant le moulage quelle que soit l'épaisseur de la pièce, ceci même si les variations d'épaisseur entre les différentes pièces ne sont pas négligeables, comme cela est le cas lorsque l'élément est réalisé en matériau thermodurcissable.

En outre, les coûts de fabrication de l'élément sont diminués puisque, pour un élément de même forme, le volume de matière utilisé diminue du fait de l'absence de fuite de matière.

On notera que, la façon dont l'étanchéité est assurée n'est pas dépendante de la forme de la pièce à surmouler. Il suffit en effet que celle-ci présente une surface pouvant coopérer avec le relief. Grâce au procédé selon l'invention, la pièce à surmouler peut donc être de toute forme, présenter des nervures, etc.

On notera également que la pièce à surmouler est une pièce structurelle. En effet, comme les tolérances de fabrication sont généralement peu importantes relativement à l'épaisseur de la pièce, l'épaisseur maximale du poinçonnage est également peu importante et cette opération dégrade très peu les propriétés mécaniques de la pièce.

Selon l'invention, la pièce à surmouler est donc une pièce structurelle du véhicule. Par « pièce structurelle», on entend une pièce contribuant à la structure du véhicule, une telle pièce étant destinée à porter une pièce de carrosserie du véhicule. Elle constitue tout ou partie d'une face avant technique de véhicule.

L'invention a également pour objet un ensemble d'une face avant technique de véhicule, également appelée ci-dessus pièce à surmouler, et d'un moule pour le surmoulage de la pièce, selon la revendication 4.

L'ensemble selon l'invention également comprendre l'une ou l'autre des caractéristiques de la liste suivante :
- la pièce est une pièce structurelle du véhicule,
- la pièce comprend au moins une protubérance, agencée pour entrer en contact avec le relief. Ainsi, si un poinçonnage a lieu, il se produit au niveau de la protubérance. Dans le cas d'une pièce structurelle, on peut prévoir que la protubérance ne fait pas partie de la structure de la pièce, c'est-à-dire n'est pas nécessaire au remplissage des exigences du cahier des charges. Cette protubérance augmente l'épaisseur de la pièce à l'endroit du contact avec le relief, voire l'endroit où la pièce risque d'être poinçonnée, la structure de la pièce n'étant alors pas dégradée du fait du poinçonnage. La protubérance agit donc comme une sécurité protégeant les propriétés structurelles du reste de la pièce,
- le moule comprend au moins deux parties aptes à former une chambre de moulage entourant une portion de la pièce. De préférence, le relief ou au moins un des reliefs longe une arête du moule délimitant la chambre de moulage. Ainsi, l'étanchéité est assurée au plus près des limites de la chambre, et la quantité de matière utilisée pour le moulage est encore optimisée,
- le moule comprend deux parties comprenant chacune un relief, les reliefs de chacune des deux parties étant de préférence situées en vis-à-vis lorsque le moule est fermé. Ainsi, lorsque l'épaisseur de la pièce est supérieure à l'épaisseur minimale, elle est poinçonnée en deux endroits distincts mais sur une épaisseur moins profonde que si un relief était agencé seulement sur l'une des parties du moule. La dégradation structurelle est donc mieux répartie sur la pièce, de sorte que celle-ci sera plus résistante si elle est soumise à de fortes contraintes locales,
- optionnellement, les deux reliefs, situés chacun sur une partie distincte du moule, sont disposés pour s'étendre en continuité l'un de l'autre sur un contour du moule lorsque celui-ci est fermé sur la pièce. On entend par « en continuité » que le relief global formé par les deux reliefs s'étend continûment dans les zones dans lesquelles se posent les problèmes de fuites. Par exemple, la pièce a la forme d'un profilé, en particulier d'un profilé ouvert, de préférence en forme de L ou de C. Dans ce cas, si les seules zones du moule dépourvues de relief correspondent aux portions de paroi du moule situées en regard de la tranche de la pièce, on considère que les reliefs s'étendent en continuité l'un de l'autre sur un contour du moule. Ainsi, l'étanchéité peut être assurée à l'aide d'un même relief sur tout le contour du moule. Le contact entre le relief et la pièce est alors susceptible d'être ininterrompu et l'étanchéité est encore mieux assurée,
- le moule comprend des moyens de centrage de la pièce, en particulier au moins une surface de butée apte à coopérer avec au moins une surface complémentaire de la pièce,
- le relief présente en section un profil en pointe. Par "pointe", on entend qu'il possède une section qui forme une base et deux parois latérales qui se rejoignent en une arête formant l'extrémité supérieure du relief, en formant un angle aigu, de préférence supérieur à l'angle de dépouille dans la direction de démoulage. L'angle est notamment inférieur à 45°, en particulier à 20°. Cette section peut correspondre à une section triangulaire mais pas seulement, les parois latérales pouvant être par exemple bombées,
- la pièce est réalisée en un matériau thermodurcissable, notamment en AMC (acronyme anglais de Advanced Moulding Compound), en SMC (acronyme anglais de Sheet Moulding Compound), ou en BMC (acronyme anglais de Bulk Moulding Compound), ou en un matériau thermoplastique, plus particulièrement à base de polyamide (PA) ou de polycarbonate (PC).
- la pièce forme une traverse de véhicule, plus particulièrement une poutre d'une face avant technique de véhicule,
- dans ce cas, le moule peut être conformé pour former sur la traverse au moins un montant s'étendant perpendiculairement à une direction longitudinale de la pièce, de préférence deux montants espacés sur celle-ci et, éventuellement, une traverse de direction longitudinale essentiellement parallèle à celle de la traverse destinée à être surmoulée. Cette traverse surmoulée est désignée « traverse inférieure » et s'étend entre les deux montants. Chacun des montants est destiné à supporter au moins un élément fonctionnel, tel que le bloc optique, et la traverse inférieure forme un appui pour une poutre de choc. Ainsi, on peut assembler hors de la chaîne de montage principale de nombreux éléments du bloc avant et économiser encore des coûts de fabrication.

L'invention a également pour objet un moule de surmoulage selon la revendication 2.

L'invention sera mieux comprise à la lecture de la description qui va suivre, donnée uniquement à titre d'exemple et faite en se référant aux dessins dans lesquels :
- la figure 1 est une vue en coupe d'un ensemble selon un premier mode de réalisation de l'invention,
- les figures 2A et 2B sont des vues en coupe d'un élément selon un mode de réalisation de l'invention, fabriqué à l'aide de l'ensemble de la figure 1, la figure 2A représentant un élément fabriqué à partir de la pièce la moins épaisse et la figure 2B représentant un élément fabriqué à partir de la pièce la plus épaisse,
- la figure 3 est une vue en perspective d'un détail de l'élément de la figure 2B,
- la figure 4 est une vue en coupe d'un ensemble selon un deuxième mode de réalisation de l'invention,
- les figures 5A et 5B sont des vues en coupe d'un élément selon un autre mode de réalisation de l'invention, fabriqué à l'aide de l'ensemble de la figure 4, la figure 5A représentant un élément fabriqué à partir de la pièce la moins épaisse et la figure 5B représentant un élément fabriqué à partir de la pièce la plus épaisse,
- la figure 6 est une vue en perspective d'une face avant technique formant un élément selon un autre mode de réalisation de l'invention.

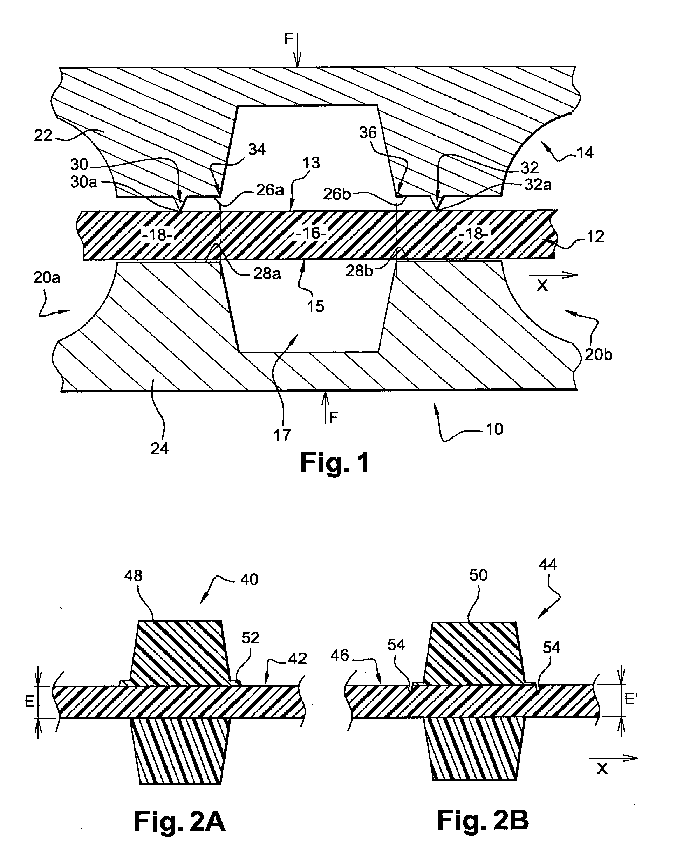

On a représenté sur la figure 1 un ensemble 10 d'une pièce 12 et d'un moule 14 pour le surmoulage de la pièce 12 selon un premier mode de réalisation de l'invention.

La pièce 12 forme une pièce structurelle de véhicule, notamment une traverse de véhicule, et est réalisée en un matériau thermodurcissable tel que l'AMC, le BMC ou le SMC. Elle a une forme de profilé, notamment de profilé ouvert en C, en U ou en L, et comprend deux faces principales opposées 13, 15 essentiellement planes.

Cette traverse 12 comprend une portion à surmouler 16 délimitée par des traits mixtes et placée dans le moule de surmoulage 14, notamment dans une chambre de moulage 17 du moule entourant la portion 16. La traverse 12 comprend également deux portions 18 situées de chaque côté de la portion 16 relativement à la direction longitudinale X de la traverse. Les portions 18 dépassent de la chambre de moulage 17 lors de l'opération de surmoulage. Comme on le voit sur la figure, elles débouchent chacune dans une chambre laissée vide 20a, 20b autour de la traverse 12, cette chambre définissant une zone sans surmoulage et les portions 18 placées dans cette chambre étant distantes des parois du moule.

Le moule 14 est réalisé en un matériau métallique et comprend deux parties 22 et 24, appelées respectivement première et deuxième partie, montées mobiles l'une par rapport à l'autre pour fermer et ouvrir le moule. Elles forment, lorsque le moule est fermé sur la traverse 12, la chambre de moulage 17 et les chambres 20a, 20b. Ces deux parties 22, 24 sont en contact en exerçant sur la pièce 12 une force F, appelée force de fermeture, de direction perpendiculaire à la direction longitudinale de la traverse.

Chaque partie 22, 24 du moule comprend deux parois 26a, 26b, 28a, 28b essentiellement planes et de normale essentiellement perpendiculaire à la direction longitudinale X de la traverse 12. Ces parois sont orientées vers la pièce, lorsqu'elle se trouve dans le moule 14.

Pour positionner correctement le moule, notamment chaque partie de celui-ci, sur la pièce, le moule comprend des moyens de centrage vis-à-vis de la traverse (non représentés), en particulier au moins une surface de butée apte à coopérer avec au moins une surface complémentaire de la pièce, par exemple située à l'extrémité de la pièce.

La première partie 22 du moule présente, sur chacune des parois 26a, 26b, un relief 30, 32 ménagé en saillie sur la paroi 26a, 26b. Chaque relief 30, 32 présente en section transversale un profil en pointe, plus particulièrement un profil triangulaire, et comprend une arête 30a, 32a tournée vers la traverse 12, de largeur inférieure à 3 mm, ainsi que deux faces inclinées relativement à la direction longitudinale X et reliant l'arête 30a, 32a de chaque relief 30, 32 au plan définissant le reste de la paroi 26a, 26b. L'angle entre les deux faces inclinées ayant pour sommet l'arête 30a, respectivement 32a, est un angle aigu, de préférence inférieur à 45°, notamment 20°. Chacun des reliefs est conformé dans la partie 22 de sorte que l'arête 30a, 32a longe une arête de la première partie 22 du moule, respectivement 34, 36, délimitant la chambre de moulage 17. Le relief 30, 32 suit l'arête 34, 36 sur toute la longueur de celle-ci, de sorte qu'il est en contact avec la face 13 sur la totalité d'une dimension de celle-ci, mesurée selon une direction transversale de la traverse perpendiculaire au plan de la figure.

Comme on le voit sur la figure 1, les seuls éléments de la première partie 22 du moule en contact avec la traverse 12 sont les reliefs 30, 32. Ceux-ci sont légèrement enfoncés dans la traverse 12 relativement au plan définissant la face 13. Ces reliefs 30, 32 permettent d'assurer l'étanchéité de la liaison moule/traverse lors du surmoulage.

En effet, toutes les traverses ne présentent pas la même épaisseur, notamment du fait du procédé de moulage (par compression) de ces traverses. Comme on le voit sur les figures 2A et 2B, l'épaisseur des traverses peut varier. On appelle épaisseur la dimension la plus petite de la traverse, s'étendant ici selon une direction appartenant au plan de coupe des figures 1 et 2, perpendiculairement à la direction longitudinale X de la traverse.

On distingue, sur la figure 2A, un élément 40 fabriqué à partir d'une traverse 42 ayant la plus petite épaisseur E possible et, sur la figure 2B, un élément 44 fabriqué à partir d'une traverse 46 ayant la plus grande épaisseur E' possible, au vu des tolérances de fabrication lors du moulage par compression de cette traverse. Les deux éléments 40, 44 sont fabriqués à l'aide du moule de la figure 1. Les éléments 40, 44 comprennent, en supplément des traverses 42, 46, formant une première partie de l'élément, une partie surmoulée, respectivement référencée 48, 50, réalisée en un matériau thermoplastique, tel que le polypropylène, et présentant la forme de la chambre de moulage 17 du moule 14 représenté à la figure 1. Les parties surmoulées 48, 50 forment respectivement une deuxième partie de chaque élément 40, 44.

Comme on le voit sur la figure 1, la traverse est placée dans le moule de sorte que son épaisseur s'étend selon une direction parallèle à celle de la direction de fermeture du moule. Le moule est configuré pour se fermer sans jeu de façon étanche sur la traverse 42 ayant la plus petite épaisseur.

Ainsi, lorsque la traverse 42 est introduite dans le moule, le relief 30, 32 du moule est en contact intime avec la face 13 et la traverse 42 ne porte pas de traces de la présence des reliefs 30, 32. On remarque tout de même que la partie surmoulée 48 de l'élément 40 comporte, sur la face 13, un film 52 en matière thermoplastique en bordure de la partie surmoulée 48, de chaque côté de celle-ci. L'épaisseur du film correspond à celle du relief 30, 32. En effet, lors du surmoulage de cette traverse 42, le contact est effectué entre la face 13 et le relief et toute la portion de la traverse en regard de la portion du moule située entre l'arête 34, respectivement 36, et le relief 30, respectivement 32, est également remplie de matière.

Pour les traverses les plus épaisses, telles que la traverse 46, la zone de contact entre le moule et la traverse est également l'arête du relief, mais au vu de l'épaisseur de la traverse, la fermeture du moule est gênée. La force de fermeture appliquée sur la partie 22 du moule est toutefois distribuée sur une surface très petite, celle des arêtes 30a, 32a. Les reliefs 30, 32 poinçonnent donc la traverse 46 jusqu'à ce que le moule se ferme, ici jusqu'à ce que les parois 26a, 26b soit en contact surfacique avec la face 13 de la traverse 46 puisqu'il s'agit de la traverse ayant l'épaisseur maximale. La partie surmoulée 50 de l'élément 44 est donc d'épaisseur moindre que la partie 48 de l'élément 40 et la traverse 46 comprend deux dépressions 54 formées de chaque côté de la partie surmoulée. Ces dépressions ont une forme complémentaire de celle des reliefs 30, 32. Pour cette traverse, l'étanchéité est assurée par les parois 26a, 26b et l'élément 44 ne comprend donc pas de film en bordure de la partie surmoulée, contrairement à l'élément 40.

Pour toute traverse d'épaisseur intermédiaire, l'étanchéité sur la face 13 de la traverse est assurée uniquement par le relief, celui-ci poinçonnant en outre la traverse pour pouvoir parvenir à la fermeture du moule. Un élément fabriqué à partir d'une traverse d'épaisseur intermédiaire comprend donc un film de matière thermoplastique, d'épaisseur inférieure à celle du film 52, et des poinçons de profondeur inférieure à celle des poinçons 54.

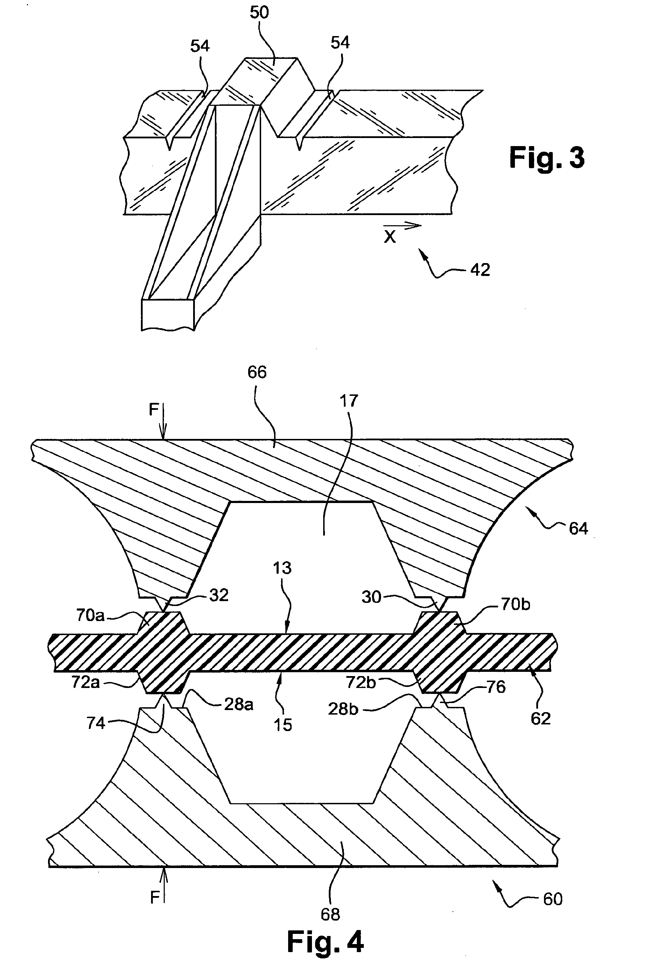

On distingue sur la figure 3 un détail de l'élément 44. On voit sur cette figure que la dépression 54 s'étend sur la totalité de la dimension transversale de la traverse 46.

L'épaisseur variable de la traverse n'est donc pas susceptible de gêner la fermeture du moule. Elle n'engendre pas non plus de fuites de matière lors du surmoulage puisque même les traverses les moins épaisses permettent d'obtenir la fermeture du moule de façon étanche.

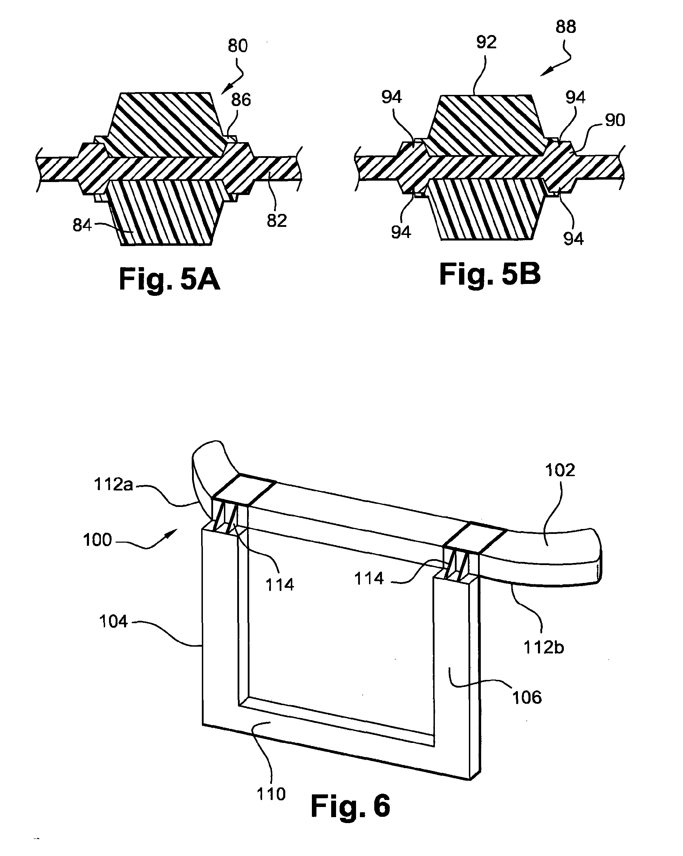

On a représenté sur les figures 4, 5A et 5B un deuxième mode de réalisation de l'invention. Toutes les références désignant des éléments communs avec le premier mode de réalisation sont reprises, et toutes les spécificités non commentées sont communes avec ce qui a été décrit pour le premier mode de réalisation.

La figure 4 représente un ensemble selon un deuxième mode de réalisation comprenant une traverse 62 et un moule 64, comportant deux parties 66, 68.

La traverse 62 comprend, s'étendant sur chaque face 13, 15 essentiellement planes, deux protubérances 70a, 70b, 72a, 72b. Ces protubérances sont situées en dehors de la portion 16 de la traverse, au voisinage de celle-ci. Elles s'étendent selon la direction transversale de la traverse 62 sur toute la dimension transversale de celle-ci. Les protubérances 70a, 72a et 70b, 72b sont disposées en vis-à-vis sur la pièce.

Les protubérances 70a, 70b, 72a, 72b sont de forme semblable. Elles ont chacune en section transversale un profil trapézoïdal et comprennent une extrémité supérieure, parallèle à un plan définissant la face 13, 15 de la traverse sur laquelle cette protubérance se trouve. Chaque protubérance 70a, 70b, 72a, 72b comprend également deux faces inclinées relativement à la direction longitudinale X de la traverse et reliant l'extrémité supérieure de chaque protubérance 70a, 70b, 72a, 72b au plan définissant la face 13, 15 sur laquelle cette protubérance se trouve.

Le moule 64 comprend une première partie 66, essentiellement semblable à la partie 22 du moule 14 décrite auparavant et une deuxième partie 68, comprenant sur chacune des parois 28a, 28b un relief 74, 76 en saillie de la paroi, disposé respectivement en vis-à-vis du relief 30, 32. Ces reliefs sont de forme semblables à celle des reliefs 30, 32.

Les reliefs 30, 32, 74, 76 sont disposés sur le moule de sorte qu'ils entrent en contact avec la pièce sur l'extrémité supérieure des protubérances de celle-ci, respectivement 70a, 70b, 72a et 72b.

Les reliefs 30, 32, 74, 76 du moule sont ménagées sur les deux parties 66, 68 du moule de telle sorte qu'ils forment un relief global s'étendant essentiellement continûment sur un contour du moule, c'est-à-dire continûment sur un contour de la traverse excepté sur les portions du moule situées en face des tranches de la traverse, lorsque le moule est fermé. En d'autres termes, les reliefs 30, 74 ; 32, 76 s'étendent en continuité l'un de l'autre.

Avec un tel ensemble, comme on le voit sur la figure 5A, un élément 80 fabriqué à l'aide du moule 64 et à partir de la traverse 82 la moins épaisse comprend une partie surmoulée 84 comportant un film 86 s'étendant partiellement sur l'extrémité supérieure de chaque protubérance, le relief 30, 32, 74, 76 ayant assuré l'étanchéité de la liaison moule/traverse lors du surmoulage en coopérant avec cette extrémité supérieure. Pour cet élément 80, l'épaisseur du film 86 est celle du relief.

Comme on le voit sur la figure 5B, un élément 88 fabriqué à l'aide du moule 64 et à partir de la traverse 90 la plus épaisse comprend une partie surmoulée 92 ne recouvrant pas l'extrémité supérieure des protubérances, l'étanchéité lors du surmoulage ayant été assurée par le contact surfacique de chaque paroi 26, 28 avec l'extrémité supérieure de chaque protubérance. En outre, l'élément 88 comprend des dépressions 94 en vis-à-vis deux à deux s'étendant sur l'extrémité supérieure de chaque protubérance, correspondant aux endroits où la traverse 90 a été poinçonnée par les reliefs 30, 32, 74, 76.

Ce mode de réalisation est plus avantageux car il permet d'éviter d'altérer les propriétés structurelles de la traverse. En effet, les protubérances de celle-ci sont des portions en surépaisseur ajoutés à la pièce par mesure de sécurité, pour pouvoir effectuer l'opération de poinçonnage dans un élément non nécessaire pour assurer la fonction structurelle de la traverse. En outre, répartir le poinçonnage sur les deux côtés de la traverse permet également d'atténuer les contraintes locales appliquées à l'élément, alors plus résistant s'il est soumis à un choc dans la zone d'une dépression.

On va maintenant décrire en référence à la figure 6 un élément selon un autre mode de réalisation particulier de l'invention.

La figure 6 représente une face avant technique de véhicule automobile 100 comprenant une traverse 102 telle que l'une ou l'autre des traverses décrites précédemment. Cette traverse 102 forme une poutre de la face avant technique. Elle est reliée à deux montants 104, 106, espacés sur la traverse et s'étendant, lorsqu'ils sont montés sur le véhicule, essentiellement verticalement et vers le bas.

Les montants 104, 106 permettent de supporter des éléments fonctionnels du véhicule, tels qu'un bloc optique. A leur extrémité inférieure, ils sont reliés entre eux par l'intermédiaire d'une traverse inférieure 110 essentiellement parallèle à la traverse 102 et formant, une fois la face avant technique 100 montée sur le véhicule, un appui pour une poutre pour le choc piéton, permettant d'empêcher la blessure du piéton au niveau de son genou.

La face avant technique 100 est une pièce surmoulée. Les montants 104, 106 et la traverse inférieure 110 ont en effet été moulés sur la traverse 102. Chaque montant 104, 106 est relié à la traverse 102 dans une zone 112a, 112b. Les parties de la traverse situées dans ces zones 112a, 112b constituent des portions à surmouler de cette traverse, recouvertes de matière. Au voisinage de ces zones, la face avant technique peut être telle que les pièces surmoulées représentées sur les figures 2, 3 ou 5. On remarque que, dans chaque zone 112a, 112b, sont agencées des nervures 114 surmoulées reliant une face latérale de la traverse et l'extrémité supérieure du montant 104, 106, de façon à renforcer la liaison de la traverse 102 et des montants 104, 106.

On notera que l'invention n'est pas limitée aux modes de réalisation décrits ci-dessus.

Selon la direction du moule correspondant à la direction transversale de la pièce à surmouler, le relief pourrait également ne pas être rectiligne : il pourrait être courbe, voire même ne pas s'étendre dans un unique plan. Ce qui importe est que la seule partie du moule qui entre en contact avec la traverse, notamment quand elle n'est pas d'épaisseur maximale, est l'arête - ou l'extrémité supérieure - du relief.

Le nombre de reliefs agencés sur le moule n'est pas limité à ceux mentionnés dans les exemples. Le moule pourrait par exemple comporter un unique relief si la partie surmoulée se trouvait à l'extrémité de la traverse. En outre, les différents reliefs d'un même moule ou d'une même partie du moule ne sont pas forcément de même forme.

Il est également à signaler que le moule peut être de forme générale différente de celle qui est décrite. Par exemple, les reliefs ne s'étendent pas obligatoirement sur tout le contour du moule. Celui-ci peut également comprendre plusieurs chambres de moulage.

De plus, les reliefs ne sont pas forcément formés par des faces planes, de pente constante. Ils peuvent être formées par des surfaces ayant par exemple un profil bombé ou sinusoïdal.

La traverse n'est pas non plus limitée aux formes décrites, de même que les protubérances éventuellement formées sur celles-ci. Les faces de cette traverse peuvent ne pas être planes et présenter par exemple des changements de direction telles que des ondulations.

De plus, les matériaux choisis pour la traverse et la matière plastique surmoulée sur la traverse ne sont pas limités à ceux décrits dans les exemples ci-dessus. La traverse à surmouler peut par exemple être également réalisée en matériau métallique ou en un matériau thermoplastique, présentant une température de fusion plus élevée que celle du matériau surmoulé sur la traverse, tel qu'un matériau à base de polyamide (PA) ou de polycarbonate (PC).

La face avant technique peut comprendre, en supplément ou à la place des montants, d'autres éléments surmoulés tels que des bras latéraux s'étendant dans le prolongement de la traverse.

On notera également que l'épaisseur des pièces à surmouler varie du fait de la variation de la course de fermeture d'un moule permettant la fabrication de ces pièces. Ces variations correspondent aux tolérances de fabrication de la pièce à surmouler.

## Revendications

1. Procédé de fabrication d'une face avant technique de véhicule, où
- on place une pièce formant poutre de face avant technique dans un moule de surmoulage comprenant au moins un relief (30, 32, 74, 76) en saillie d'une paroi (26a, 26b, 28a, 28b), de préférence une paroi plane, du moule, et
- on ferme le moule de sorte que le relief (30, 32, 74, 76) entre en contact linéaire avec au moins une face (13, 15) de la pièce sur la totalité d'une dimension de ladite face (13, 15) **caractérisé en ce que** le moule poinçonne la pièce, et **en ce que** le relief (30, 32, 74, 76) présente en section un profil en pointe.

2. Moule de surmoulage pour la fabrication d'une face avant technique de véhicule (12 ; 42, 46 ; 62 ; 82, 90 ; 102) présentant au moins un relief (30, 32, 74, 76) en saillie d'une paroi (26a, 26b, 28a, 28b), de préférence une paroi plane, du moule, cette paroi formant une chambre de réception d'une pièce à surmouler formant poutre de face avant de véhicule, le relief (30, 32, 74, 76) étant conformé de sorte qu'il est apte, lors de la fermeture du moule, à entrer en contact linéaire avec au moins une face (13, 15) de la pièce sur la totalité d'une dimension de ladite face (13, 15), et de sorte que le moule poinçonne la pièce, **caractérisé en ce que** le relief (30, 32, 74, 76) présente en section un profil en pointe.

3. Moule selon la revendication précédente, dans lequel le relief (30, 32, 74, 76) est allongé suivant une direction perpendiculaire à une direction de fermeture du moule.

4. Ensemble (10 ; 60) d'une pièce formant poutre de face avant technique (12 ; 42, 46 ; 62 ; 82, 90 ; 102) de véhicule et d'un moule (14 ; 64) pour le surmoulage de la pièce selon l'une des revendications 2 et 3.

5. Ensemble selon la revendication précédente, dans lequel la pièce (62 ; 82, 90) comprend au moins une protubérance (70a, 70b, 72a, 72b), agencée pour entrer en contact avec le relief (30, 32, 74, 76).

6. Ensemble selon l'une quelconque des revendications 4 et 5, dans lequel le moule (14 ; 64) comprend au moins deux parties (22, 24 ; 66, 68) aptes à former une chambre de moulage (17) entourant une portion de la pièce, le relief ou au moins un des reliefs (30, 32, 74, 76) étant agencé pour longer une arête du moule délimitant la chambre.

7. Ensemble selon l'une quelconque des revendications 4 à 6, dans lequel le moule (64) comprend deux parties (66, 68) présentant chacune un relief (30, 32, 74, 76), les reliefs étant situés en vis-à-vis lorsque le moule est fermé, et de préférence disposés pour s'étendre en continuité l'un de l'autre sur un contour du moule lorsque celui-ci est fermé.

8. Ensemble selon l'une quelconque des revendications 4 à 7, dans lequel le moule comprend des moyens de centrage de la pièce, en particulier au moins une surface de butée apte à coopérer avec au moins une surface complémentaire de la pièce.

9. Ensemble selon l'une quelconque des revendications 4 à 8, dans lequel la pièce (12 ; 42, 46; 62; 82, 90; 102) est réalisée en un matériau thermodurcissable, plus particulièrement en AMC (acronyme anglais de Advanced Moulding Compound), en BMC (acronyme anglais de Bulk Moulding Compound) ou en SMC (acronyme anglais de Sheet Moulding Compound), ou en un matériau thermoplastique, plus particulièrement à base de polyamide (PA) ou de polycarbonate (PC).

10. Ensemble selon l'une des revendications 4 à 9, dans lequel le moule est conformé pour former sur la pièce (102) au moins un montant (104, 106) s'étendant perpendiculairement à une direction longitudinale de la pièce, de préférence deux montants espacés sur la pièce, et éventuellement une traverse (110) de direction longitudinale essentiellement parallèle à celle de la pièce (102) et s'étendant entre les deux montants (104, 106).

## Patentansprüche

1. Verfahren zur Herstellung einer Frontmaske eines Fahrzeugs, bei dem
- ein Teil, das den Frontmaskenträger bildet, in einem Aufformwerkzeug platziert wird, das wenigstens eine Erhöhung (30, 32, 74, 76) umfasst, die von einer Wand (26a, 26b, 28a, 28b), vorzugsweise einer flachen Wand, des Werkzeugs vorspringt, und
- das Werkzeug so geschlossen wird, dass die Erhöhung (30, 32, 74, 76) mit wenigstens einer Seite (13, 15) des Teils über eine gesamte Dimension der Seite (13, 15) in linearen Kontakt kommt,
**dadurch gekennzeichnet, dass** das Werkzeug das Teil stanzt und dass die Erhöhung (30, 32, 74, 76) im Querschnitt ein Spitzprofil aufweist.

2. Aufformwerkzeug zur Herstellung einer Frontmaske (12; 42, 46; 62; 82, 90; 102) eines Fahrzeugs, die wenigstens eine Erhöhung (30, 32, 74, 76) aufweist, die von einer Wand (26a, 26b, 28a, 28b), vorzugsweise einer flachen Wand, des Werkzeugs vorspringt, wobei diese Wand eine Aufnahmekammer für ein aufzuformendes Teil bildet, das den Frontmaskenträger des Fahrzeugs bildet, wobei die Erhöhung (30, 32, 74, 76) so ausgebildet ist, dass sie, beim Schließen des Werkzeugs, mit wenigstens einer Seite des Teils (13, 15) über eine gesamte Dimension der Fläche (13, 15) in linearen Kontakt kommt und dass das Werkzeug das Teil stanzt, **dadurch gekennzeichnet, dass** die Erhöhung (30, 32, 74, 76) im Querschnitt ein Spitzprofil aufweist.

3. Werkzeug nach dem vorhergehenden Anspruch, wobei die Erhöhung (30, 32, 74, 76) entlang einer zu einer Schließrichtung des Werkzeugs senkrechten Richtung langgestreckt ist.

4. Anordnung (10; 60) aus einem Teil, das den Träger einer Frontmaske (12; 42, 46; 62; 82, 90; 102) eines Fahrzeugs bildet, und einem Werkzeug (14; 64) zum Aufformen des Teils nach einem der Ansprüche 2 und 3.

5. Anordnung nach dem vorhergehenden Anspruch, wobei das Teil (62; 82, 90) wenigstens eine Ausstülpung (70a, 70b, 72a, 72b) umfasst, die vorgesehen ist, um mit der Erhöhung (30, 32, 74, 76) in Kontakt zu kommen.

6. Anordnung nach einem der Ansprüche 4 und 5, wobei das Werkzeug (14; 64) wenigstens zwei Teile (22, 24; 66, 68) umfasst, die angepasst sind, um eine Formkammer (17) zu bilden, die einen Teil des Teils umgibt, wobei die Erhöhung oder wenigstens eine der Erhöhungen (30, 32, 74, 76) vorgesehen ist, um an einer Kante des Werkzeugs, welche die Kammer begrenzt, entlang zu führen.

7. Anordnung nach einem der Ansprüche 4 bis 6, wobei das Werkzeug (84) zwei Teile (66, 68) umfasst, die jedes eine Erhöhung (30, 32, 74, 76) aufweisen, wobei die Erhöhungen einander gegenüber liegen, wenn das Werkzeug geschlossen ist, und vorzugsweise angeordnet sind, um sich kontinuierlich miteinander über eine Kontur des Werkzeugs zu erstrecken, wenn dieses geschlossen ist.

8. Anordnung nach einem der Ansprüche 4 bis 7, wobei das Werkzeug Mittel zum Zentrieren des Teils umfasst, insbesondere wenigstens eine Anschlagfläche für das Zusammenwirken mit wenigstens einer komplementären Fläche des Teils.

9. Anordnung nach einem der Ansprüche 4 bis 8, wobei das Teil (12; 42, 46; 62; 82, 90; 102) aus einem wärmehärtbaren Material realisiert ist, insbesondere aus AMC (englische Abkürzung für Advanced Moulding Compound), aus BMC (englische Abkürzung für Advanced Moulding Compound) oder aus SMC (englische Abkürzung für Sheet Moulding Compound) oder aus einem thermoplastischen Material, insbesondere auf Basis von Polyamid (PA) oder von Polycarbonat (PC).

10. Anordnung nach einem der Ansprüche 4 bis 9, wobei das Werkzeug ausgebildet ist, um auf dem Teil (102) wenigstens eine Säule (104, 106) zu bilden, die sich zu einer Längsrichtung des Teils senkrecht erstreckt, vorzugsweise zwei Säulen, die auf dem Teil beabstandet sind, und gegebenenfalls eine Querstrebe (110), deren Längsrichtung zu der des Teils (102) im Wesentlichen parallel ist und die sich zwischen den zwei Säulen (104, 106) erstreckt.

## Claims

1. Method of manufacturing a vehicle technical front-end, wherein:
- a part forming a beam of a technical front-end is placed in an overmoulding mould comprising at least one relief (30, 32, 74, 76) projecting from a wall (26a, 26b, 28a, 28b), preferably a flat wall, of the mould, and
- the mould is closed such that the relief (30, 32, 74, 76) comes into linear contact with at least one side (13, 15) of the part over the entire length of one dimension of said side (13, 15), **characterised in that** the mould punches the part, and **in that** the cross-section of the relief (30, 32, 74, 76) has a pointed profile.

2. Overmoulding mould for manufacturing a vehicle technical front-end (12, 42, 46, 62, 82, 90, 102) having at least one relief (30, 32, 74, 76) projecting from a wall (26a, 26b, 28a, 28b), preferably a flat wall, of the mould, this wall forming a reception chamber for a part to be overmoulded forming a beam of a vehicle front-end, the relief (30, 32, 74, 76) being shaped such that it can, when the mould is being closed, come into linear contact with at least one side (13, 15) of the part over the entire length of one dimension of said side (13, 15), and such that the mould punches the part, **characterised in that** the cross-section of the relief (30, 32, 74, 76) has a pointed profile.

3. Mould according to the preceding claim, wherein the relief (30, 32, 74, 76) is elongated along a direction perpendicular to a closing direction of the mould.

4. Assembly (10, 60) of a part forming a beam of a vehicle technical front end (12, 42, 46, 62, 82, 90, 102) and of a mould (14, 64) for overmoulding the part according to claim 2 or 3.

5. Assembly according to the preceding claim, wherein the part (62, 82, 90) comprises at least one protuberance (70a, 70b, 72a, 72b), arranged to come into contact with the relief (30, 32, 74, 76).

6. Assembly according to claim 4 or 5, wherein the mould (14, 64) comprises at least two parts (22, 24, 66, 68) capable of forming a moulding chamber (17) surrounding a portion of the part, the relief or at least one of the reliefs (30, 32, 74, 76) being arranged to run along one edge of the mould defining the chamber.

7. Assembly according to any one of claims 4 to 6, wherein the mould (64) comprises two parts (66, 68) each having a relief (30, 32, 74, 76), the reliefs being located opposite each other when the mould is closed, and preferably arranged to extend continuously one after the other on a contour of the mould when it is closed.

8. Assembly according to any one of claims 4 to 7, wherein the mould comprises means for centring the part, in particular at least one stop surface capable of cooperating with at least one complementary surface of the part.

9. Assembly according to any one of claims 4 to 8, wherein the part (12, 42, 46, 62, 82, 90, 102) is made of a thermosetting material, more especially AMC (Advanced Moulding Compound), BMC (Bulk Moulding Compound) or SMC (Sheet Moulding Compound), or a thermoplastic material, more especially one based on polyamide (PA) or polycarbonate (PC).

10. Assembly according to one of claims 4 to 9, wherein the mould is shaped to form on the part (102) at least one upright (104, 106) extending perpendicular to a longitudinal direction of the part, preferably two uprights separate from each other on the part, and possibly a cross member (110) of longitudinal direction substantially parallel to that of the part (102) and extending between the two uprights (104, 106).
